# EUROPÄISCHE PATENTSCHRIFT

(11) **EP 3 752 731 B1**
(45) Veröffentlichungstag und Bekanntmachung des Hinweises auf die Patenterteilung: **17.11.2021**
(21) Anmeldenummer: 19705351.5
(22) Anmeldetag: 14.02.2019
(51) Int. Cl.: F03B 7/00, F03B 17/06

(54) **STAUDRUCKMASCHINE**
RAM PRESSURE MACHINE
MACHINE À PRESSION DYNAMIQUE

(30) Priorität: 14.02.2018 AT 501362018
(43) Veröffentlichungstag der Anmeldung: 23.12.2020
(73) Patentinhaber: STREIN, Stefan, 8010 Graz (AT)
(72) Erfinder: STREIN, Stefan, 8010 Graz (AT)
(74) Vertreter: Puchberger & Partner Patentanwälte
(86) Internationale Anmeldenummer: PCT/EP2019/053674
(87) Internationale Veröffentlichungsnummer: WO 2019/158644

(56) Entgegenhaltungen:
- WO-A2-2011/082705
- CN-A- 105 952 568
- DE-A1- 3 911 125
- US-A- 1 525

## Beschreibung

Die Erfindung betrifft eine Staudruckmaschine zur Umwandlung der hydraulischen Energie eines Mediums, insbesondere Wasser, in Rotationsenergie insbesondere für geringe Fallhöhen im Bereich von 0,1m bis 5m.

Staudruckmaschinen sind in unterschiedlichen Ausführungen bekannt. Derartige Staudruckmaschinen umfassen in der Regel mindestens zwei mit einer Nabe verbundene Radscheiben, die um eine horizontale Wellenachse drehbar sind, und mehrere, an den Radscheiben angeordnete längliche Schaufeln, die um jeweils parallel zur Wellenachse angeordnete Drehachsen drehbar angeordnet sind. Der Aufbau herkömmlicher Staudruckmaschinen ist beispielsweise in der AT404973 B beschrieben.

Als Schaufeln sind starre Schaufeln bekannt. Nachteilig an diesen herkömmlichen Staudruckmaschinen ist, dass durch die unbeweglichen Schaufeln die strömungsmechanischen Verluste, vor allem die Ein- und Austauchverluste, hoch sind, die Schaufelkammern effektiv befüllt und entleert werden müssen, und so der Wirkungsgrad niedrig ist. Aus dem Stand der Technik sind auch Stauwasserräder bekannt, welche kippende Schaufeln umfassen. Nachteilig an diesen herkömmlichen Stauwasserrädern ist aber, dass die Schaufeln meist nur um 90° kippbar sind und meist eine komplexe Mechanik zur Bewegungssteuerung erfordern. Ferner ist die hydraulische Energie des strömenden Mediums, insbesondere aus kleineren Flüssen und bei geringen Fallhöhen, durch diese herkömmlichen Vorrichtungen nicht optimal nutzbar.

Ferner ist ein herkömmliches Wasserrad mit auf- und zuklappbaren Schaufeln aus der US 1525 A bekannt.

Aufgabe der Erfindung ist es, die Nachteile des Standes der Technik zu überwinden. Insbesondere ist es Aufgabe der Erfindung, eine Staudruckmaschine zu schaffen, bei der die Schaufeln im Wesentlichen strömungsneutral und somit im Wesentlichen verlustarm in das Wasser eingleiten kann und bei der die Energie im Wesentlichen durch die Nutzung des hydrostatischen Drucks gewonnen wird. Ferner soll die Staudruckmaschine kosteneffizient gebaut und betrieben werden können.

Die erfindungsgemäße Aufgabe wird dadurch gelöst, dass sich die Drehachsen der Schaufeln im Wesentlichen mittig zwischen einer Nabenaußenkante und einer Radscheibenaußenkante befinden, und in mindestens einer Stellung der Radscheiben eine Schaufel dichtend an der Nabenaußenkante anliegt

Dadurch ist es möglich, die hydraulische Energie des strömenden Mediums zum Großteil in Rotationsenergie umzuwandeln. Ferner können die hydraulischen Verluste, also im Wesentlichen die Turbulenzen beim Ein- und Austauchen der Schaufeln, minimiert werden. Durch die Rotation der Schaufeln können diese schräg in das strömende Medium gleiten, was optimale Geschwindigkeitsdreiecke und Relativströmungen bewirkt. Zudem wird die Bildung von Schaufelkammern vermieden, welche in den herkömmlichen Staudruckmaschinen verlustbehaftet befüllt und entleert werden müssen. Durch die erfindungsgemäße Staudruckmaschine können Wirkungsgrade von im Wesentlichen über 90 % und eine äußerst vorteilhafte Teillastcharakteristik realisiert werden.

Erfindungsgemäß ist eine Drehvorrichtung zur Drehung der Schaufeln vorgesehen, welche dazu ausgeführt ist, die Schaufeln relativ zu den Radscheiben zu verdrehen oder zu verstellen. Insbesondere kann die Drehvorrichtung die Ausrichtung der Schaufeln derart verdrehen oder verstellen, dass diese in mindestens einer Stellung der Radscheiben dichtend an der Nabenaußenkante anliegen.

Die Drehvorrichtung kann dazu ausgeführt sein, die Schaufeln relativ zu den Radscheiben derart in Drehung zu versetzen, dass sich die Schaufeln im Wesentlichen mit der halben Winkelgeschwindigkeit der Radscheiben drehen.

Dadurch kann erreicht werden, dass sich bei der Drehung der Radscheiben um 360° eine Schaufel jeweils nur um etwa 180° dreht.

Die Drehvorrichtung kann aber auch dazu ausgeführt sein, die Schaufeln relativ zu den Radscheiben derart in Drehung zu versetzen, dass sich die Schaufeln im Wesentlichen mit der gleichen Winkelgeschwindigkeit der Radscheiben drehen. Dadurch wird erreicht, dass sich bei der Drehung der Radscheiben um 360° eine Schaufel jeweils ebenfalls um etwa 360° dreht.

Die Drehvorrichtung kann aber auch dazu ausgeführt sein, dass die Schaufeln selbst bei einer vollen Umdrehung der Radscheiben relativ zu den Radscheiben im Wesentlichen keine volle Drehung vollziehen.

Die Drehvorrichtung kann vorzugsweise derart ausgeführt sein, dass der Drehsinn der Schaufeln relativ zu den Radscheiben entgegengesetzt zum Drehsinn der Radscheiben selbst ist.

Die Drehvorrichtung kann erfindungsgemäß einen Motor, beispielsweise einen Elektromotor, hydraulischen Motor oder pneumatischen Motor, umfassen, der die Schaufeln dreht.

Die Drehvorrichtung kann statt des Motors oder zusätzlich zum Motor auch ein konstantes oder variables, periodisches Getriebe, beispielsweise ein Kurvengetriebe, Koppelgetriebe, Umlaufrädergetriebe wie Planetengetriebe, eine Winkelgetriebeanordnung, ein Kettengetriebe oder ein Riemengetriebe umfassen, welches die Drehbewegung der Radscheiben mit einem mittleren Übersetzungsverhältnis von etwa 1:2 oder mit einem mittleren Übersetzungsverhältnis von 1:1 oder mit einem mittleren Übersetzungsverhältnis von 1:0, also ohne volle Umdrehung der Schaufeln bei einer vollen Umdrehung der Radscheiben, auf die Schaufeln überträgt. Somit drehen sich die Schaufeln im Wesentlichen mit der halben Winkelgeschwindigkeit der Radscheiben, im Wesentlichen mit der gleichen Winkelgeschwindigkeit der Radscheiben, oder vollführen keine vollständige Drehung. Ferner kann auch vorgesehen sein, dass das Übersetzungsverhältnis der Drehvorrichtung im Verlauf einer Periode nicht konstant ist. Derartige Getriebe ermöglichen eine periodische, jedoch nicht konstante Drehbewegung der Schaufeln. Beispielsweise kann vorgesehen sein, dass sich die Schaufeln in einem bestimmten Winkelbereich mit identischer Winkelgeschwindigkeit wie die Radscheiben drehen, und außerhalb dieses Winkelbereichs schneller drehen, langsamer drehen, oder relativ zur Radscheibe stillstehen. Dies kann insbesondere bei Verwendung einer kreisförmigen Nabe vorteilhaft sein, um über einen bestimmten Winkelbereich der Radscheiben, beispielsweise etwa 45° bis 90°, sicherzustellen, dass die Schaufeln den Kontakt zur Nabe nicht verlieren, sondern relativ zu den Radscheiben im Wesentlichen stillstehen.

Die erfindungsgemäß vorgesehenen drehbaren Schaufeln bewirken optimierte Ein- und Austauchvorgänge und machen eine bei herkömmlichen Staudruckmaschinen erforderliche Belüftung der Schaufelkammern unnötig. Die erfindungsgemäße Staudruckmaschine ermöglicht es, die Schaufeln im Wesentlichen strömungsneutral im Wasser zu bewegen. Durch die erfindungsgemäße Drehvorrichtung kann eine kontinuierliche Drehung der Schaufeln kosteneffizient mechanisch umgesetzt werden.

Erfindungsgemäß kann vorgesehen sein, dass in jener Stellung der Radscheiben, bei der eine Schaufel dichtend an der Nabenaußenkante anliegt, sich diese Schaufel zumindest bis zur Radscheibenaußenkante erstreckt.

Erfindungsgemäß kann vorgesehen sein, dass die Staudruckmaschine einen Einlaufbereich und einen Ablaufbereich umfasst. Diese sind insbesondere in unterschiedlichen Höhen angeordnet, sodass das Medium vom Einlaufbereich zum Ablaufbereich fließt und dabei die Staudruckmaschine antreibt. Der Einlaufbereich und der Ablaufbereich können so ausgeführt sein, dass sie gemeinsam mit der Nabe, den Radscheiben und den Schaufeln eine Barriere für das Medium bilden. Ferner ist es dadurch möglich, die Staudruckmaschinen optimal an die jeweiligen Standortvoraussetzungen (Fallhöhe, Durchfluss, Platzangebot, etc.) anzupassen und den Wirkungsgrad der Staudruckmaschine zu erhöhen.

Erfindungsgemäß kann vorgesehen sein, dass in mindestens einer Stellung der Radscheiben eine Schaufel dichtend an der Nabenaußenkante anliegt und sich bis zur Oberseite des Einlaufbereichs erstreckt.

Erfindungsgemäß kann ebenfalls vorgesehen sein, dass in mindestens einer weiteren Stellung der Radscheiben eine Schaufel dichtend an der Nabenaußenkante anliegt und sich bis zur Oberseite des Ablaufbereichs erstreckt.

Erfindungsgemäß kann ferner vorgesehen sein, dass sich die Schaufeln nicht bis zur Radscheibenaußenkante erstrecken. Erfindungsgemäß kann jedoch ebenfalls vorgesehen sein, dass sich die Schaufeln über die Radscheibenaußenkante hinaus erstrecken. Erfindungsgemäß kann auch vorgesehen sein, dass sich die Schaufeln genau bis zur Radscheibenaußenkante erstrecken.

Erfindungsgemäß kann vorgesehen sein, dass die Schaufeln als Schaufelblätter ausgeführt sind, deren Drehpunkt mittig angeordnet ist. Alternativ kann der Drehpunkt auch exzentrisch angeordnet sein. Die Schaufeln können kajakförmig sein; es ist aber auch jede andere Formgebung, insbesondere auch eine asymmetrische Form, unter Berücksichtigung der mechanischen Steifigkeit und der Strömungseigenschaften erfindungsgemäß vorgesehen. Eine exzentrische Form kann insbesondere bei einem Übersetzungsverhältnis von 1:1 oder 1:0 vorgesehen sein.

Die Radscheiben können im Wesentlichen kreisförmig ausgebildet sein. Ebenso kann die Nabe bzw. die Nabenaußenkante im Wesentlichen kreisförmig ausgeführt sein. Erfindungsgemäß kann jedoch auch vorgesehen sein, dass die Nabenaußenkante die Form eines Vielecks aufweist und Dichtflächen sowie Auslaufflächen umfasst, wobei die Dichtflächen zum dichtenden Eingriff mit den Schaufeln ausgebildet sind, und die Auslaufflächen stets beabstandet zu den Schaufeln angeordnet sind, sodass zwischen den Auslaufflächen und den Schaufeln stets ein Abströmbereich gebildet ist.

Erfindungsgemäß kann vorgesehen sein, dass die Dichtflächen gekrümmt sind, insbesondere einen in Bezug zur Wellenachse nach innen gewölbten, vorzugsweise kreisbogenförmigen Querschnitt aufweisen. Dadurch wird der dichtende Eingriff der Schaufeln in die Dichtflächen verbessert.

Erfindungsgemäß kann vorgesehen sein, dass am Übergang der Dichtflächen zu den Auslaufflächen eine Dichtkante gebildet ist. Die Dichtkante kann die Form einer scharfen Kante haben. Die Dichtkante kann aber auch in Form einer Abrundung gebildet sein. Der Winkel zwischen den Dichtflächen und den Auslaufflächen kann vorzugsweise über 90°, beispielsweise 120°, sein.

Durch die Drehung der Radscheiben wird eine Schaufel zuerst mit der Dichtfläche in Eingriff gebracht. Dadurch entsteht nach dem Eintauchen in das Medium eine Barriere. Durch die Drehung der Radscheiben bewegt sich der mit der Dichtfläche in Eingriff stehende Endbereich der Schaufel an der Dichtfläche entlang. Im Wesentlichen an jenem Punkt, an dem sich die Schaufel an ihrem tiefsten Drehpunkt befindet und insbesondere vertikal ausgerichtet ist, liegt die Schaufel, insbesondere deren Endbereich, dichtend an der Dichtkante der Nabenaußenkante an. Dieser Punkt kann auch um einige Grad vom tiefsten Drehpunkt abweichen. Beispielsweise kann dieser Punkt um bis zu 10° oder bis zu 20° versetzt vom tiefsten Drehpunkt der Schaufel sein.

Durch die Drehung der Radscheiben dreht sich die Schaufel weiter und die Schaufel wird von der Dichtfläche entfernt. Dadurch wird die gebildete Barriere aufgelöst.
Der Endbereich der Schaufel, welche insbesondere dichtend sowohl an der Dichtfläche, als auch an der Dichtkante zur Bildung der Barriere anliegt, ist somit nicht mehr mit der Nabenaußenkante in Eingriff, sondern von dieser beabstandet.

Erfindungsgemäß kann vorgesehen sein, dass die Auslauffläche aus mehreren, vorzugsweise zwei, winkelig zueinander angeordneten Teilflächen gebildet ist. Insbesondere kann eine erste und eine zweite Teilfläche vorgesehen sein. Erfindungsgemäß kann vorgesehen sein, dass die Dichtkanten bezüglich der Wellenachse kreisförmig angeordnet sind.

Erfindungsgemäß kann vorgesehen sein, dass an den Radscheiben mindestens drei, vorzugsweise sechs oder sieben Schaufeln in gleichmäßigen Abständen angeordnet sind. Insbesondere kann vorgesehen sein, dass zwei, drei, vier, fünf, sechs, sieben, acht, neun, zehn oder mehr Schaufeln in gleichmäßigen Abständen an den Radscheiben angeordnet sind. Insbesondere können die Schaufeln auf einer mit dem Umfang der Radscheibe konzentrischen Kreisbahn angeordnet sein.

Gegebenenfalls ist vorgesehen, dass die Schaufeln an den Radscheiben so angeordnet sind, dass die Drehung der Schaufeln kollisionsfrei möglich ist. Das bedeutet gegebenenfalls, dass jede Schaufel ohne mit einer weiteren Schaufel zusammenzustoßen drehbar ist. Gegebenenfalls sind die Abstände zwischen den Drehachsen, insbesondere den Mittelpunkten, der Schaufeln gleich.

Erfindungsgemäß kann vorgesehen sein, dass die Länge der Schaufeln größer ist als der Abstand zwischen den Drehachsen benachbarter Schaufeln.

Erfindungsgemäß kann vorgesehen sein, dass eine Schaufel bei Drehung der Radscheiben einen höchsten und einen tiefsten Drehpunkt aufweist, wobei an dem höchsten Drehpunkt der Schaufel die Schaufel horizontal ausgerichtet ist, und wobei an dem tiefsten Drehpunkt der Schaufel die Schaufel vertikal ausgerichtet ist. Es kann auch vorgesehen sein, dass eine Schaufel an ihrem höchsten Drehpunkt jeweils um einen Offset-Winkel von unter 20°, unter 15°, unter 10°, oder unter 5° verdreht ist, um sich an die Gegebenheiten anzupassen.

Erfindungsgemäß kann vorgesehen sein, dass an dem höchsten Drehpunkt einer Schaufel die Schaufel parallel zum Ablaufbereich ausgerichtet ist, und dass an dem tiefsten Drehpunkt der Schaufel die Schaufel normal zum Ablaufbereich ausgerichtet ist. Es kann auch vorgesehen sein, dass eine Schaufel an ihrem höchsten Drehpunkt jeweils um einen Offset-Winkel von unter 20°, unter 15°, unter 10°, oder unter 5° verdreht ist, um sich an die Gegebenheiten anzupassen.

Dadurch ist die Drehbewegung der Schaufeln definiert. Eine Schaufel ist während einer Umdrehung der Radscheiben von einer ersten Position in eine zweite Position bringbar. Bei der Umdrehung der Radscheiben um 360° ergeben sich gegebenenfalls ein tiefster und ein höchster Drehpunkt einer Schaufel. In der ersten Position einer Schaufel, welche gegebenenfalls der tiefste Drehpunkt ist, kann die Schaufel vertikal ausgerichtet sein. Die Schaufel erstreckt sich gegebenenfalls in dieser Stellung der Radscheiben von der Nabenaußenkante zur Oberseite des Ablaufbereichs. Insbesondere liegt die Schaufel gegebenenfalls in dieser Stellung der Radscheiben dichtend an der Nabenaußenkante an, wodurch eine Barriere gebildet ist.

In der zweiten Position der Schaufel, welche gegebenenfalls der höchste Drehpunkt ist, kann die Schaufel horizontal ausgerichtet sein. Insbesondere kann vorgesehen sein, dass die Schaufel an dem höchsten vertikalen Drehpunkt parallel zum Untergrund des strömenden Mediums, insbesondere parallel zum Ablaufbereich der Staudruckmaschine, ausgerichtet ist. Insbesondere kann vorgesehen sein, dass die Schaufel an diesem tiefsten Drehpunkt normal auf den Untergrund des strömenden Mediums, insbesondere normal auf den Ablaufbereich, ausgerichtet ist.

Erfindungsgemäß kann vorgesehen sein, dass die Staudruckmaschine ein mittelschlächtiges Wasserrad umfasst oder dass die Staudruckmaschine als ein mittelschlächtiges Wasserrad ausgebildet ist.

Die Erfindung betrifft ferner die Verwendung einer erfindungsgemäßen Staudruckmaschine zur Umwandlung von hydraulischer Energie eines strömenden Mediums in Rotationsenergie, wobei die Staudruckmaschine bei einer Fallhöhe des strömenden Mediums zwischen 0,1 m und 5 m, insbesondere zwischen 0,5 m und 4 m, besonders bevorzugt zwischen 0,5 m und 3 m, eingesetzt wird.

Die Staudruckmaschine kann insbesondere für Fallhöhen von unter 5 Metern verwendet werden und/oder einsetzbar sein. Dadurch können die Eingriffe in die Ökologie als auch die Baumaßnahmen verringert werden.

Die Staudruckmaschine kann erfindungsgemäß so dimensioniert werden, dass der Stand des strömenden Mediums im Einlaufbereich den durch die Dichtkanten bezüglich der Wellenachse auf der Nabe gebildeten Kreis tangiert.

Weitere erfindungsgemäße Merkmale ergeben sich aus den Ansprüchen, der Beschreibung der Ausführungsbeispiele und den Figuren.

Die Erfindung wird nun am Beispiel exemplarischer Ausführungsbeispiele näher erläutert.

Fig. 1a und Fig. 1b zeigen eine schematische Darstellung einer ersten Ausführungsform einer erfindungsgemäßen Staudruckmaschine in einer seitlichen Ansicht und im Aufriss.

Die Figuren 2a und 2d zeigen eine schematische Darstellung einer zweiten Ausführungsform einer erfindungsgemäßen Staudruckmaschine in einer seitlichen Ansicht und in einer Schnittdarstellung entlang der Linie B-B. Fig. 2c zeigt eine erste Variante dieser Ausführungsform, Fig. 2b eine zweite Variante dieser Ausführungsform, jeweils in einer Schnittdarstellung entlang der Linie A-A in Fig. 2a.

Die Figuren 3a und 3c zeigen eine schematische Darstellung einer weiteren Ausführungsform einer erfindungsgemäßen Staudruckmaschine in einer seitlichen Ansicht und in einer Schnittdarstellung entlang der Linie A-A. Fig. 3d zeigt eine erste Variante dieser Ausführungsform, Fig. 3b eine zweite Variante dieser Ausführungsform, jeweils in einer Schnittdarstellung entlang der Linie B-B in Fig. 3a.

Die Figuren 4a, 4b und 4c zeigen eine schematische Darstellung einer weiteren Ausführungsform einer erfindungsgemäßen Staudruckmaschine in einer seitlichen Ansicht und in einer Schnittdarstellung entlang der Linien A-A und B-B in Fig. 4a.

Die Figuren 5a und 5b zeigen eine schematische Darstellung einer weiteren Ausführungsform einer erfindungsgemäßen Staudruckmaschine in einer seitlichen Ansicht und in einer Schnittdarstellung entlang der Linie B-B in Fig. 5a.

Die Figuren 6a und 6b zeigen eine schematische Darstellung einer weiteren Ausführungsform einer erfindungsgemäßen Staudruckmaschine in einer seitlichen Ansicht und in einer Schnittdarstellung entlang der Linie A-A. Fig. 6c zeigt eine erste Variante dieser Ausführungsform, Fig. 6d eine zweite Variante dieser Ausführungsform, jeweils in einer Schnittdarstellung entlang der Linie B-B in Fig. 6a.

Die Figuren 7a und 7b zeigen schematische Aufrisse weiterer Ausführungsformen erfindungsgemäßer Staudruckmaschinen.

Die Figuren 8a bis 9d zeigen weiterer Ausführungsformen erfindungsgemäßer Staudruckmaschinen. Figur 10 zeigt unterschiedliche Ausführungsformen erfindungsgemäßer Schaufeln.

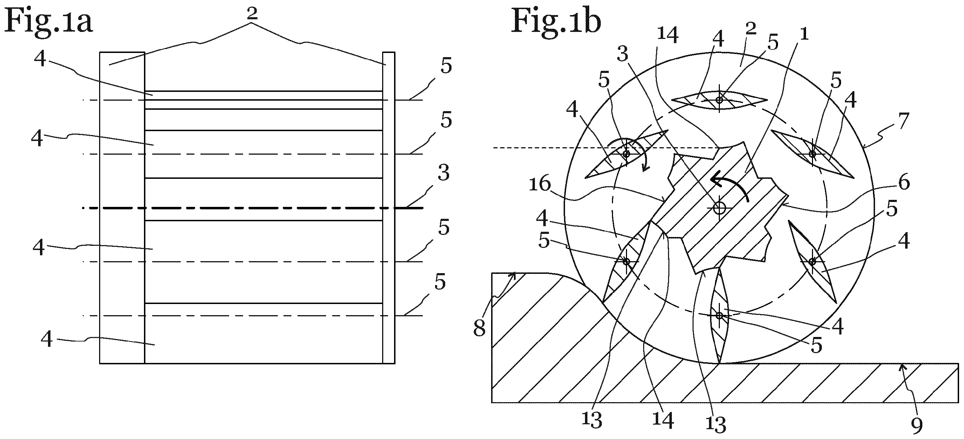

Fig. 1a zeigt eine schematische Darstellung einer ersten Ausführungsform einer erfindungsgemäßen Staudruckmaschine von vorne, also aus Sicht des strömenden Mediums. Die Staudruckmaschine umfasst zwei mit einer Nabe 1 verbundene Radscheiben 2. Die Radscheiben 2 sind um eine horizontale Wellenachse 3 drehbar. Eine der beiden Radscheiben 2 ist größer als die andere Radscheibe 2, um ausreichend Platz zur Anordnung der im Folgenden beschriebenen Drehvorrichtung zu schaffen. Zwischen den Radscheiben 2 sind mehrere längliche Schaufeln 4 angeordnet. Diese Schaufeln 4 sind an den Radscheiben 2 zur Umwandlung der hydraulischen Energie eines strömenden Mediums in Rotationsenergie angeordnet. Die Schaufeln 4 sind um parallel zur horizontalen Wellenachse 3 angeordnete Drehachsen 5 drehbar.

Als Drehvorrichtung zur Drehung der Schaufeln 4 ist ein Getriebe vorgesehen, welches in der größeren der beiden Radscheiben 2 angeordnet ist. Das Getriebe überträgt die Drehbewegung der Radscheiben 2 mit einem Übersetzungsverhältnis von 1:2 auf die Schaufeln 4. Die Schaufeln 4 drehen sich somit mit der halben Winkelgeschwindigkeit der Radscheiben 2.

Fig. 1b zeigt eine Ansicht der Staudruckmaschine von der Seite. Die Staudruckmaschine umfasst eine mit den Radscheiben 2 verbundene Nabe 1, die um eine Wellenachse 3 drehbar gelagert ist. Weiters angedeutet ist ein Einlaufbereich 8 und ein Auslaufbereich 9 für das strömende Medium. Die Radscheiben 2 werden durch das strömende Medium angetrieben und bewegen sich in dieser Betriebsart entgegen dem Uhrzeigersinn, wie in der Figur durch einen Pfeil angedeutet ist.

Zwischen den Radscheiben 2 sind sechs längliche, drehbare Schaufeln 4 angeordnet. Die Schaufeln 4 sind im Wesentlichen kajakförmig. Die Drehachsen 5 der Schaufeln 4 sind im Wesentlichen mittig zwischen der Nabenaußenkante 6 und der Radscheibenaußenkante 7 angeordnet. Die Drehachsen 5 liegen auf einem strichliniert dargestellten Kreis, der im Wesentlichen konzentrisch zu den kreisförmigen Radscheiben 2 und im Wesentlichen in der Mitte zwischen der Radscheibenaußenkante 7 und der Nabenaußenkante 6 liegt.

Die Schaufeln 4 sind als um ihre Mittelpunkte drehbare Schaufelblätter mit einem im Wesentlichen kajakförmigen Querschnitt ausgeführt.

Die sechs Schaufeln 4 sind an den Radscheiben 2, insbesondere entlang ihres Umfangs, in zueinander gleichmäßigen Abständen angeordnet. Durch die gleichmäßige Anordnung der Schaufeln 4 ist es möglich, dass sich die Schaufeln 4 kollisionsfrei um ihre Drehachsen 5 drehen können.

Die Nabenaußenkante 6 der Nabe 1 weist die Form eines Vielecks auf. Die Nabenaußenkante 6 umfasst sechs Dichtflächen 13, die zum Eingriff in die Schaufeln 4 in Richtung zur Wellenachse 3 gekrümmt ausgeführt sind. Die Dichtflächen 13 enden an Dichtkanten 14, an die sich Auslaufflächen 16 anschließen. Die Auslaufflächen 16 sind in jeder Position der Schaufeln 4 beabstandet zu diesen, sodass zwischen den Auslaufflächen 16 und den Schaufeln 4 stets ein Abströmbereich zum Abströmen des Mediums gebildet wird. Die Auslauffläche 16 ist in dieser Ausführungsform aus zwei, in einem Winkel von etwa 120° winkelig zueinander angeordneten Teilflächen gebildet. Die Dichtfläche 13 schließt mit der Auslauffläche 16 ebenfalls etwa einen Winkel von 120° ein.

Die Dichtkanten 14 sind entlang der Nabe 1 bezüglich der Wellenachse 3 im Wesentlichen kreisförmig angeordnet. Die Staudruckmaschine ist unter Berücksichtigung des Einlaufbereichs 8, des Auslaufbereichs 9 und des strichliert angedeuteten Wasserstands in dieser Ausführungsform so dimensioniert, dass die Position der Dichtkante 14 an ihrem höchsten Punkt etwa dem strichliert angedeuteten Wasserstand entspricht. Dadurch wird eine besonders hohe Effizienz der Staudruckmaschine erreicht.

In der dargestellten Stellung dieser Ausführungsform erstreckt sich die untere Schaufel 4 in einer Stellung der Radscheiben 2 radial von der Nabenaußenkante 6 zur Radscheibenaußenkante 7. Dadurch wird an dieser Stelle für das Medium eine Barriere gebildet. In dieser Stellung liegt die Schaufel 4 dichtend an der Dichtfläche 13 der Nabenaußenkante 6 an.

Somit ist die gebildete Barriere von der Nabe 1, der Schaufel 4, den Radscheiben 2 und dem Untergrund des strömenden Mediums, insbesondere einem Ablaufbereich 9 der Staudruckmaschine, begrenzt, sodass die Energie des Mediums zur Gänze an die Schaufel 4 weitergegeben werden kann.

Somit wird bereits ab dieser Stellung eine Barriere für das Medium gebildet. Diese Barriere bleibt während der Drehung der Radscheiben 2 bestehen, und zwar bis zu jener Stellung, in welcher die Schaufel 4 an der Dichtkante 14 anliegt und sich somit von der Dichtkante 14 an der Nabenaußenkante 6 über die Radscheibenaußenkante 7 bis zur Oberseite des Ablaufbereichs 9 erstreckt.

In der Stellung der Radscheiben 2, in welcher sich die untere Schaufel 4 von der Nabenaußenkante 6 zur Radscheibenaußenkante 7 erstreckt, wird die so gebildete Barriere vom Untergrund des strömenden Mediums, insbesondere dem Ablaufbereich 9 der Staudruckmaschine, begrenzt. Bei einer vollen Umdrehung der Radscheibe 2 um 360° werden die Schaufeln 4 um 180° gedreht. Die Drehung der Schaufeln 4 erfolgt in diesem Ausführungsbeispiel relativ zu den Radscheiben 2 im Uhrzeigersinn, wie durch den Pfeil schematisch angedeutet ist, also entgegen der Drehrichtung der Nabe 1.

Durch die Drehung der Schaufeln 4 ist es möglich, dass die Schaufeln 4 im Wesentlichen strömungsneutral und somit verlustarm in das strömende Medium, insbesondere Wasser, eingleiten und auch wieder austreten.

Am tiefsten Drehpunkt einer Schaufel 4 ist die Schaufel 4 vertikal ausgerichtet. Insbesondere steht die Schaufel 4 an diesem Punkt normal auf den Ablaufbereich 9. An diesem tiefsten Drehpunkt erstreckt sich die Schaufel 4 dichtend von der Nabenaußenkante 6 bis zur Radscheibenaußenkante 7. Am höchsten Drehpunkt einer Schaufel 4 ist die Schaufel 4 horizontal und somit parallel zum Ablaufbereich 9 ausgerichtet.

Die Energie der Staudruckmaschine wird im Wesentlichen durch die Nutzung des hydrostatischen Drucks gewonnen. Der Wasserstau wird durch die Nabe 1, die Schaufeln 4, die Radscheiben 2 und den Untergrund des strömenden Mediums, insbesondere dem Einlaufbereich 8 und dem Ablaufbereich 9 sowie gegebenenfalls seitlichen Wänden, realisiert. Durch die Staudruckmaschine sind Wirkungsgrade über 90 % und eine äußerst vorteilhafte Teillastcharakteristik möglich.

Die Staudruckmaschine ist in dieser Ausführungsform als ein mittelschlächtiges Wasserrad ausgebildet. Diese Ausführungsform einer Staudruckmaschine ist für die Verwendung einer Fallhöhe des strömenden Mediums von zwischen 0,1 und 5 Metern, insbesondere zwischen 0,5 und 4 Metern, besonders bevorzugt zwischen 0,5 und 3 Metern, einsetzbar.

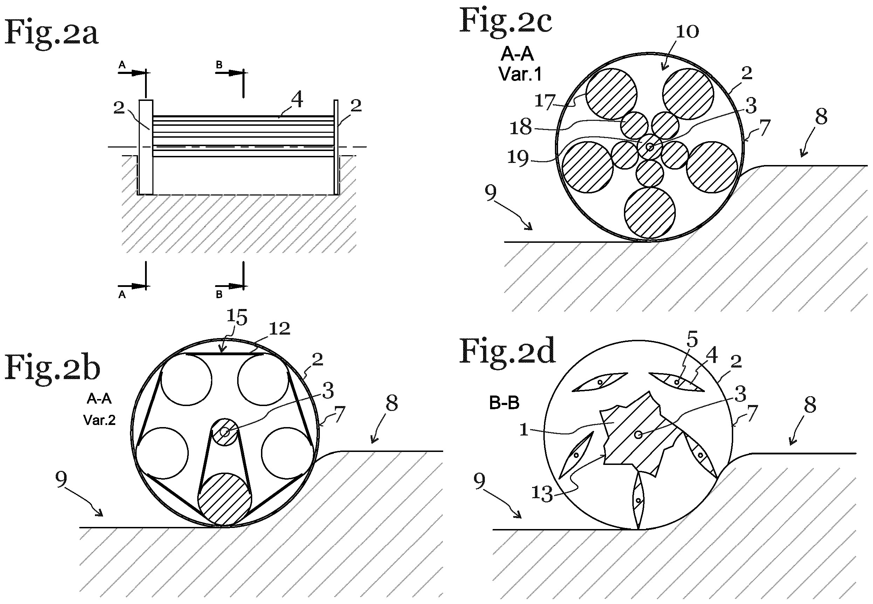

Die Figuren 2a und 2d zeigen eine schematische Darstellung einer zweiten Ausführungsform einer erfindungsgemäßen Staudruckmaschine in einer seitlichen Ansicht und in einer Schnittdarstellung entlang der Linie B-B. Fig. 2c zeigt eine erste Variante dieser Ausführungsform in einer Schnittdarstellung entlang der Linie A-A in Fig. 2a.

In dieser Ausführungsform umfasst die Staudruckmaschine fünf längliche und kajakförmige Schaufeln 4, welche an den Radscheiben 2 angeordnet sind. Die Radscheiben 2 sind mit einer Nabe 1 verbunden. Die Radscheiben 2 sind um eine horizontale Wellenachse 3 drehbar. Die Schaufeln 4 sind jeweils um eine parallel zur Wellenachse 3 angeordnete Drehachse 5 drehbar.

Zur Drehung der Schaufeln 4 ist in Variante 1 ein Planetengetriebe 10 vorgesehen, welches in Fig. 2c schematisch dargestellt ist. Das Planetengetriebe 10 überträgt die Drehbewegung der Radscheiben 2 mit einem Übersetzungsverhältnis von 1:2 auf die Schaufeln 4. Die Schaufeln 4 drehen sich somit mit halber Winkelgeschwindigkeit der Radscheiben 2. Der Drehsinn der Schaufeln 4 ist, bezogen auf die Radscheiben 2, entgegengesetzt zum Drehsinn der Radscheiben 2.

Die Drehpunkte der Schaufeln 4, also die Drehachsen 5, sind im Wesentlichen mittig zwischen der Nabenaußenkante 6 und der Radscheibenaußenkante 7 angeordnet. Ebenfalls dargestellt ist ein Einlaufbereich 8 und ein Ablaufbereich 9.

In Fig. 2d ist ersichtlich, dass die Schaufeln 4 dichtend in die Dichtflächen 13 der Nabe 1 eingreifen. Insbesondere stehen die Schaufeln 4 in mehreren Stellungen der Radscheiben 2 mit einem ihrer Endbereiche dichtend mit der Dichtfläche 13 in Eingriff. Dadurch ist die hydraulische Energie zu einem Großteil in Rotationsenergie umwandelbar.

Durch die weitere Drehung der Radscheiben 2 werden die Schaufeln 4 weiter gedreht und befinden sich in einer Stellung der Radscheiben 2 in einer Position, in welcher ein Endbereich der Schaufeln 4 dichtend an der Dichtkante 14 anliegt. In dieser Stellung erstreckt sich eine Schaufel 4 von der Nabenaußenkante 6 zur Oberseite des Ablaufbereichs 9. Anschließend an jede Dichtkante 14 ist jeweils eine Auslauffläche 16 an der Nabenaußenkante 6 vorgesehen.

Durch die Drehung der Radscheiben 2 bewegt sich der Endbereich der Schaufel 4 weiter und steht nicht mehr mit der Nabenaußenkante 6, der Dichtfläche 13 und der Dichtkante 14, in Eingriff. Der Endbereich der Schaufel 4 ist nun beabstandet von der Auslauffläche 16 angeordnet. Dadurch kann das Medium in dieser Stellung der Radscheiben 2 bereits an der Schaufel 4 vorbeiströmen. Dadurch steht der Endbereich der Schaufel 4 nicht mehr mit der Nabe 1 in Eingriff.

Die Schaufeln 4 sind als um ihre Mittelpunkte drehbare Schaufelblätter ausgeführt. Die Schaufeln 4 sind in gleichmäßigen Abständen entlang eines zum Umfang der Radscheiben 2 konzentrischen Kreises an den Radscheiben 2 angeordnet. Die Schaufeln 4 weisen bei der Drehung der Radscheiben 2 einen höchsten und tiefsten Drehpunkt auf. An dem höchsten Drehpunkt der Schaufeln 4 sind die Schaufeln 4 horizontal ausgerichtet. An dem tiefsten Drehpunkt der Schaufeln 4 sind die Schaufeln 4 vertikal ausgerichtet.

In Fig. 2c ist das Planetengetriebe 10 schematisch dargestellt. Das Planetengetriebe 10 umfasst äußere Planeten 17, mittlere Planeten 18 und eine Sonne 19. Durch die Anordnung der Planeten 17, 18 im Planetengetriebe 10 wird die Drehbewegung der Radscheiben 2 im Übersetzungsverhältnis von 1:2 auf die Schaufeln 4 übertragen, wobei der Drehsinn der äußeren Planeten 17 relativ zu den Radscheiben 2 umgekehrt zum Drehsinn der Radscheiben 2 ist.

In Fig. 2b ist eine alternative Ausführungsform der Drehvorrichtung gezeigt. Die Drehvorrichtung ist als Riemengetriebe 15 ausgeführt. Das Riemengetriebe 15 umfasst mehrere Riemen 12. Durch die Anordnung der Riemen 12 des Riemengetriebes 15 wird die Drehbewegung der Radscheiben 2 mit einem Übersetzungsverhältnis von 1:2 auf die fünf Schaufeln 4 übertragen.

Die Schaufeln 4 drehen sich somit mit der halben Winkelgeschwindigkeit der Radscheiben 2, wobei der Drehsinn der Schaufeln 4 relativ zu den Radscheiben 2 wiederum umgekehrt zum Drehsinn der Radscheiben 2 ist.

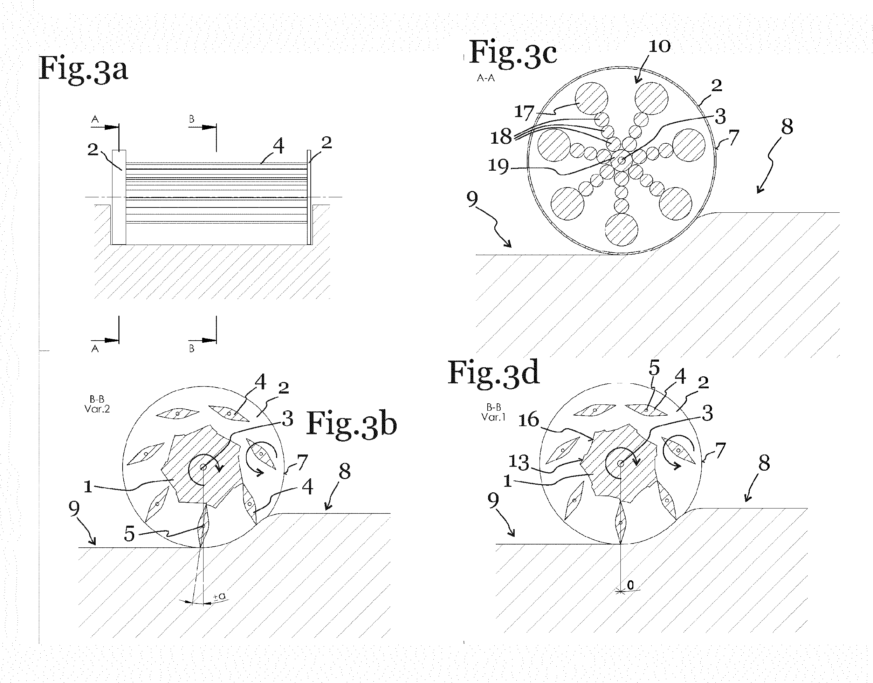

Die Figuren 3a und 3c zeigen eine schematische Darstellung einer weiteren Ausführungsform einer erfindungsgemäßen Staudruckmaschine in einer seitlichen Ansicht und in einer Schnittdarstellung entlang der Linie A-A. Fig. 3d zeigt eine erste Variante dieser Ausführungsform, Fig. 3b eine zweite Variante dieser Ausführungsform, jeweils in einer Schnittdarstellung entlang der Linie B-B in Fig. 3a. In dieser Ausführungsform sind sieben Schaufeln 3 vorgesehen. Die Drehvorrichtung ist als Planetengetriebe 10 mit äußeren Planeten 17, mehreren mittleren Planeten 18, sowie einer Sonne 19 ausgeführt. Durch die Anordnung der Planeten 17, 18 im Planetengetriebe 10 wird die Drehbewegung der Radscheiben 2 im Übersetzungsverhältnis von 1:2 auf die Schaufeln 4 übertragen, wobei der Drehsinn der äußeren Planeten 17 relativ zu den Radscheiben 2 umgekehrt zum Drehsinn der Radscheiben 2 ist.

Fig. 3d zeigt eine erste Variante dieser Ausführungsform, bei der eine Schaufel 4 am tiefsten Drehpunkt im Wesentlichen normal zum horizontal verlaufenden Ablaufbereich 9 ausgerichtet ist.

Fig. 3b zeigt eine zweite Variante dieser Ausführungsform, bei der eine Schaufel 4 am tiefsten Drehpunkt in einem Winkel von etwa 10° zum horizontal verlaufenden Ablaufbereich 9 ausgerichtet ist.

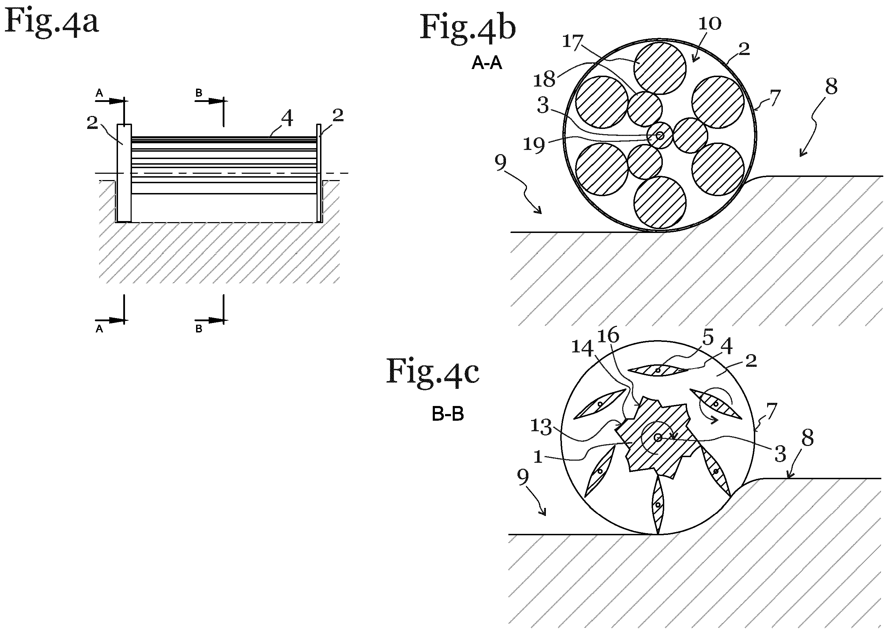

Die Figuren 4a, 4b und 4c zeigen eine schematische Darstellung einer weiteren Ausführungsform einer erfindungsgemäßen Staudruckmaschine in einer seitlichen Ansicht und in einer Schnittdarstellung entlang der Linien A-A und B-B in Fig. 4a.

In dieser Ausführungsform ist die Drehvorrichtung wiederum als Planetengetriebe 10 ausgeführt, wobei sechs äußere Planeten 17, drei mittlere Planeten 18 und eine Sonne 19 vorgesehen sind. Die Drehvorrichtung treibt in diesem Ausführungsbeispiel sechs Schaufeln 4 an.

In Fig. 4c ist ersichtlich, dass die Staudruckmaschine einen Einlaufbereich 8 und einen Ablaufbereich 9 umfasst, wobei in einer Stellung der Radscheiben 2 eine Schaufel 4 dichtend an der Nabenaußenkante anliegt und sich bis zur Oberseite des Einlaufbereichs erstreckt. Eine andere Schaufel 4 liegt dichtend an der Nabenaußenkante 6 an und erstreckt sich bis zur Oberseite des Ablaufbereichs 9.

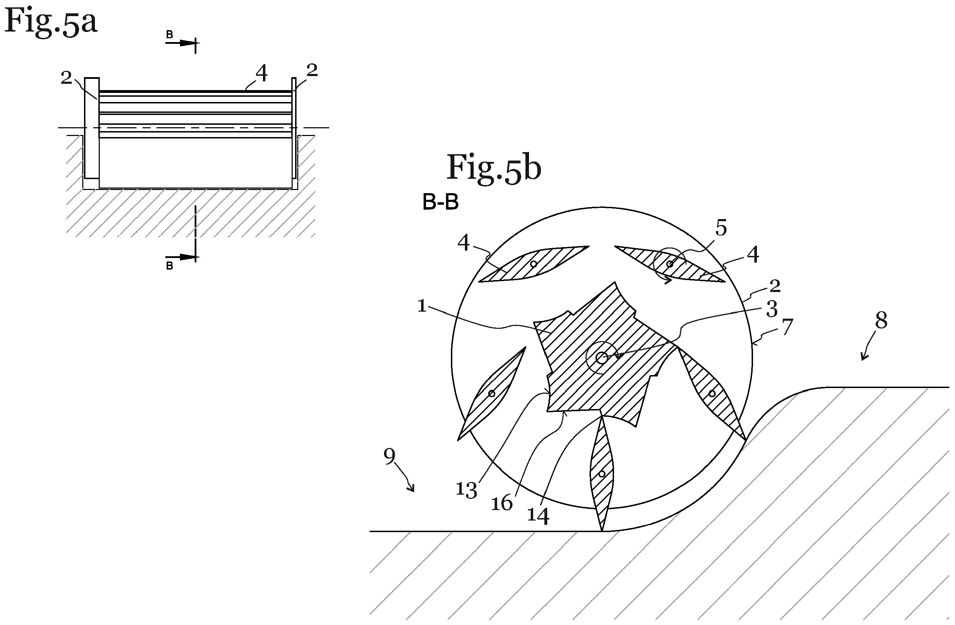

Die Figuren 5a und 5b zeigen eine schematische Darstellung einer weiteren Ausführungsform einer erfindungsgemäßen Staudruckmaschine in einer seitlichen Ansicht und in einer Schnittdarstellung entlang der Linie B-B in Fig. 5a.

In dieser Ausführungsform erstrecken sich die Schaufeln 4 über die Radscheibenaußenkanten 7 hinaus. Die Staudruckmaschine umfasst einen Einlaufbereich 8 und einen Ablaufbereich 9, wobei in mindestens einer Stellung der Radscheiben 2 eine Schaufel 4 dichtend an der Nabenaußenkante 6 anliegt und sich über die Radscheibenaußenkante hinaus bis zur Oberseite des Einlaufbereichs 8 erstreckt.

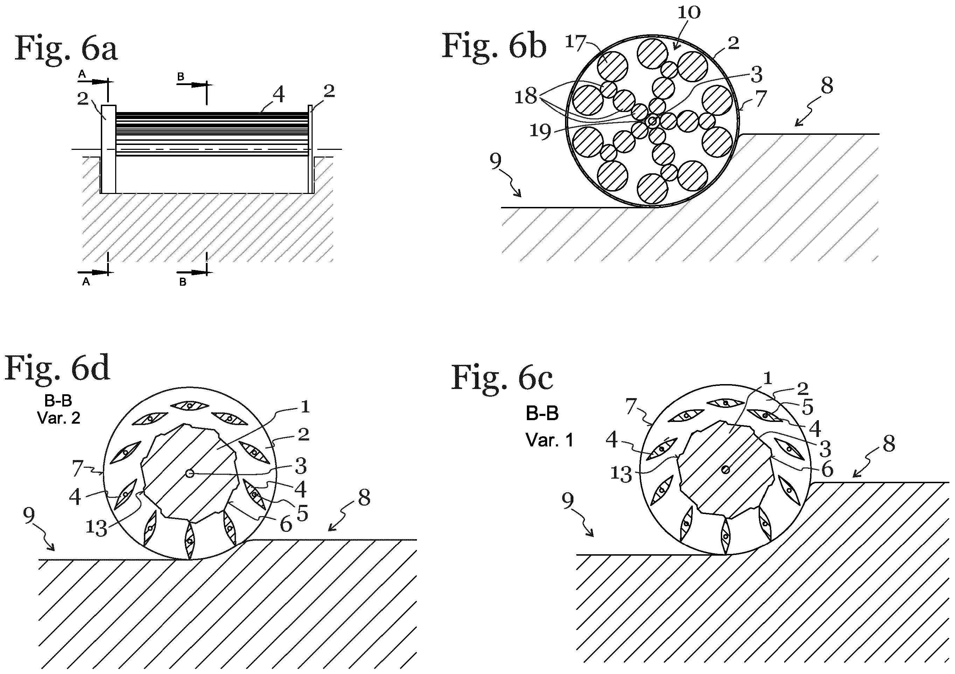

Die Figuren 6a und 6b zeigen eine schematische Darstellung einer weiteren Ausführungsform einer erfindungsgemäßen Staudruckmaschine in einer seitlichen Ansicht und in einer Schnittdarstellung entlang der Linie A-A. In dieser Ausführungsform sind zehn Schaufeln 4 vorgesehen, die über ein Planetengetriebe 10 mit äußeren Planeten 17, mittleren Planeten 18 und einer Sonne 19 angetrieben sind.

Fig. 6c zeigt eine erste Variante dieser Ausführungsform mit hoher Fallhöhe, Fig. 6d eine zweite Variante dieser Ausführungsform mit niedriger Fallhöhe, jeweils in einer Schnittdarstellung entlang der Linie B-B in Fig. 6a. Es kann vorgesehen sein, dass der Wasserstand im Einlaufbereich 8 etwa jenem Punkt entspricht, den die Dichtkanten 14 am höchsten Drehpunkt der Radscheiben 2 einnehmen.

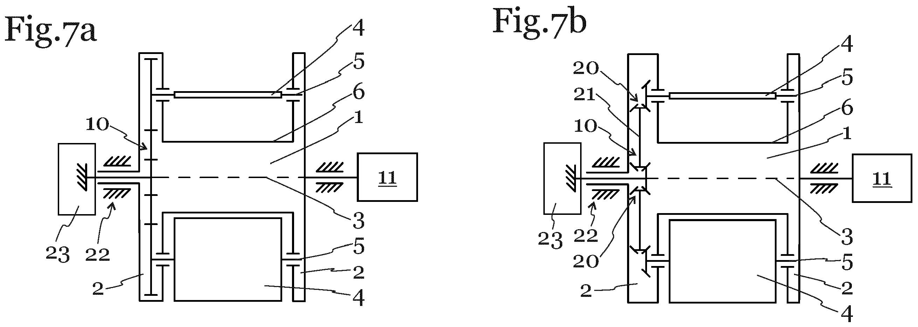

Die Figuren 7a und 7b zeigen schematische Aufrisse weiterer Ausführungsformen erfindungsgemäßer Staudruckmaschinen. In diesen Figuren sind die Nabe 1, die Radscheiben 2, die horizontale Wellenachse 3, die Schaufeln 4, die Drehachse 5, die Nabenaußenkante 6, ein Planetengetriebe 10 und ein Energiewandler 11, sowie ein Lager 22 und eine Verdrehsicherung 23 der Sonne 19 schematisch dargestellt.

Bei dem Energiewandler 11 kann es sich beispielsweise um einen elektrischen Generator mit einem Getriebe handeln.

Fig. 7b zeigt eine weitere Ausführungsform der Erfindung, in welcher die Schaufeln 4 über zwei Winkelgetriebeanordnungen 20 und eine Verbindungswelle 21 mit der Sonne verbunden sind. Weiters sind ein Lager 22 und eine Verdrehsicherung 23 vorgesehen. Auch bei dieser Ausführungsform der Staudruckmaschine wird die Drehbewegung der Radscheiben 2 mit einem Übersetzungsverhältnis von 1:2 auf die Schaufeln 4 übertragen.

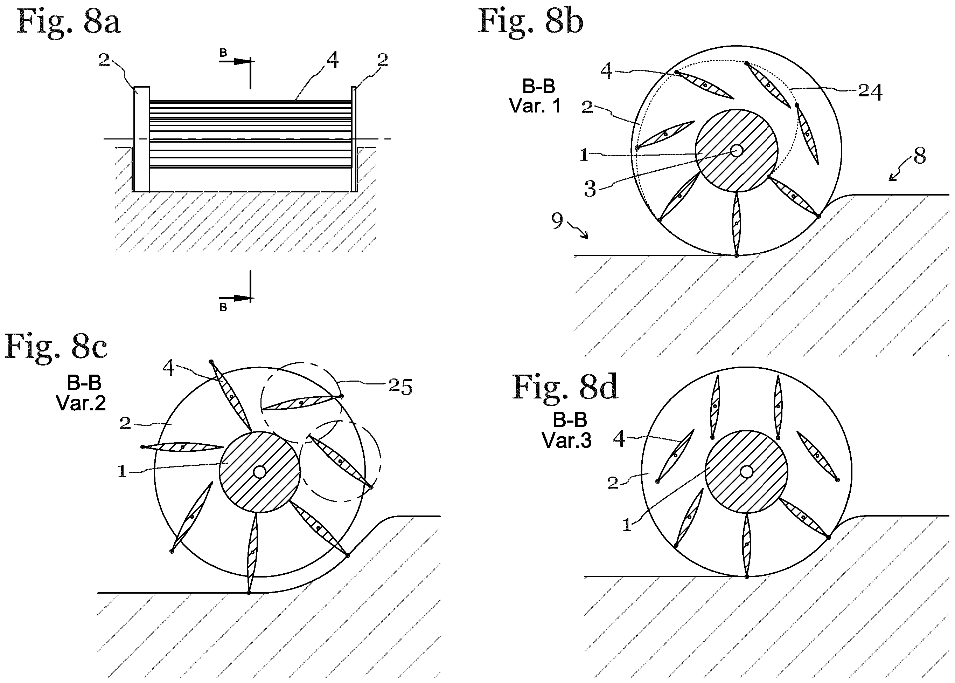

Die Figuren 8a bis 8d zeigen weitere Ausführungsformen erfindungsgemäßer Staudruckmaschinen. In diesen Ausführungsformen ist die Nabe 1 kreisförmig. Fig. 8a zeigt wieder eine Ansicht der Staudruckmaschine von vorne; die Figuren 8b, 8c und 8d zeigen den Schnitt A-A für drei unterschiedliche Ausführungsformen der Schaufeln 4 und des mittleren Übersetzungsverhältnisses. Bei diesen Ausführungsformen wird durch eine variable Übersetzung sichergestellt, dass die Schaufeln über einen bestimmten Drehwinkelbereich der Radscheibe den Kontakt zur Nabe nicht verlieren. Die jeweiligen Positionen der Schaufelenden wurden in diesen Figuren mit Punkten verdeutlicht.

Bei der Variante 1 gemäß Figur 8b ist die Drehvorrichtung derart ausgeführt, dass die Schaufeln 4 sich im Mittel mit der halben Winkelgeschwindigkeit der Radscheiben 2 drehen; das mittlere Übersetzungsverhältnis ist also 1:2. Schematisch dargestellt ist eine Drehachsentrajektorie 24 der Endpunkte der Schaufeln 4, welche einen spiralförmigen Verlauf aufweist.

Bei der Variante 2 gemäß Figur 8c ist die Drehvorrichtung derart ausgeführt, dass die Schaufeln 4 keine volle Drehung relativ zu den Radscheiben 2 vollführen; das mittlere Übersetzungsverhältnis ist also 1:0. Bei einer Drehung der Radscheiben 2 um 360° vollführen die Schaufeln 4 für den stehenden Beobachter eine volle Umdrehung. Die Schaufeln 4 bleiben jedoch, durch Verwendung eines variablen Getriebes, über einen bestimmten Drehwinkelbereich der Radscheiben 2 in Kontakt mit der Nabe 1.

In diesem Ausführungsbeispiel sind die Schaufeln 4 länger als der Abstand zweier Drehachsen 5 benachbarter Schaufeln 4; die Drehvorrichtung ist jedoch derart ausgeführt, dass die Schaufeln 4 nicht kollidieren, obwohl die strichliert dargestellten Endpunkttrajektorien 25 der Schaufeln 4 überlappen.

Bei der Variante 3 gemäß Figur 8d ist die Drehvorrichtung derart ausgeführt, dass die Schaufeln 4 sich relativ zu den Radscheiben 2 mit derselben mittleren Winkelgeschwindigkeit drehen; das mittlere Übersetzungsverhältnis ist also 1:1. Bei einer Drehung der Radscheiben 2 um 360° vollführen die Schaufeln 4 für den stehenden Beobachter keine volle Umdrehung. Wiederum bleiben die Schaufeln 4 über einen bestimmten Drehwinkelbereich der Radscheiben 2 in Kontakt mit der Nabe 1.

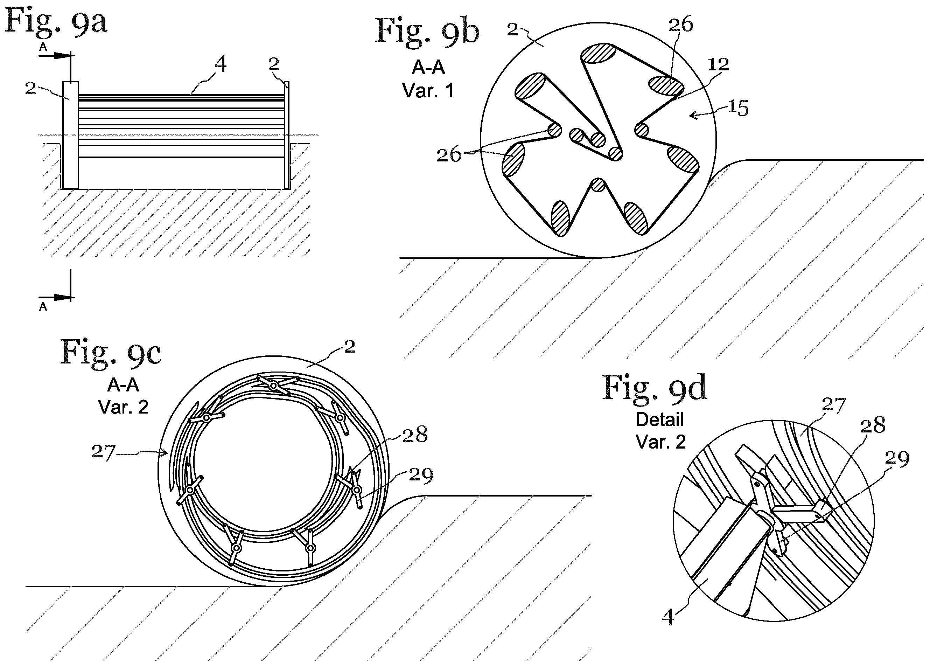

Die Figuren 9a bis 9d zeigen weiterer Ausführungsformen erfindungsgemäßer Staudruckmaschinen. Fig. 9a zeigt wieder eine Ansicht der Staudruckmaschine von vorne; die Figuren 9b und 9c zeigen den Schnitt A-A für zwei unterschiedliche Ausführungsformen Drehvorrichtungen; Fig. 9d zeigt ein Detail der Ausführung gemäß Fig. 9c.

Bei der Variante 1 gemäß Fig. 9b umfasst die Drehvorrichtung ein Riemengetriebe mit Riemenscheiben 26 und einem umlaufenden Riemen 12. Die innenliegenden Riemenscheiben 26 sind kreisförmig, während die außenliegenden Riemenscheiben 26, an denen die Schaufeln 4 befestigt sind, eine ovale Form aufweisen. Durch diese Form der außenliegenden Riemenscheiben 26 wird eine nicht-konstante, sondern variable Übersetzung der Radscheibendrehung auf die Schaufeldrehung erreicht. In einer nicht dargestellten Ausführungsform wird statt dem Riemengetriebe ein Kettengetriebe mit ovalen Kettenrädern verwendet.

Bei der Variante 2 gemäß Fig. 9c und dem Detail in Fig. 9d umfasst die Drehvorrichtung ein Kurvengetriebe 27 mit Kurven, in denen Abnehmer 28 geführt werden, welche über Drehgelenke 29 mit den Schaufeln 4 verbunden sind. Zur Totpunktüberwindung sind in dieser Ausführungsform partielle Zusatzschienen vorgesehen.

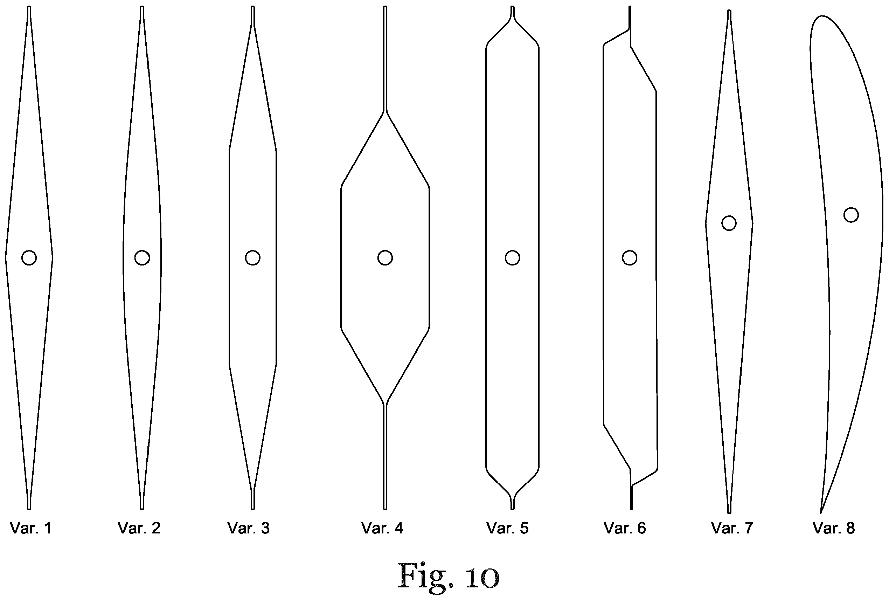

Figur 10 zeigt in schematischer Form die Querschnitte unterschiedlicher Ausführungsformen erfindungsgemäßer Schaufeln 4. Es sind insbesondere Ausführungsformen mit rotationssymmetrischen, asymmetrischen oder beliebig ausgestalteten Schaufeln sowie im Fall der Variante 8 Schaufeln mit einem NACA-Tragflächenprofil vorgesehen.

Die Erfindung beschränkt sich nicht auf die konkret dargestellten Ausführungsbeispiele, sondern erstreckt sich auf sämtliche Staudruckmaschinen gemäß den nachfolgenden Ansprüchen. Insbesondere soll die Erfindung nicht auf bestimmte Arten zur Realisierung der erfindungsgemäß vorgesehenen Drehvorrichtung der Schaufeln 4 beschränkt sein, die auf unterschiedliche Art und Weise realisiert werden kann.

### Bezugszeichenliste

- 1: Nabe
- 2: Radscheibe
- 3: Wellenachse
- 4: Schaufel
- 5: Drehachse
- 6: Nabenaußenkante
- 7: Radscheibenaußenkante
- 8: Einlaufbereich
- 9: Ablaufbereich
- 10: Planetengetriebe
- 11: Energiewandler
- 12: Riemen
- 13: Dichtfläche
- 14: Dichtkante
- 15: Riemengetriebe
- 16: Auslauffläche
- 17: Äußerer Planet
- 18: Mittlerer Planet
- 19: Sonne
- 20: Winkelgetriebeanordnung
- 21: Verbindungswelle
- 22: Lager
- 23: Verdrehsicherung
- 24: Drehachsentrajektorie
- 25: Endpunkttrajektorie
- 26: Riemenscheibe
- 27: Kurvengetriebe
- 28: Abnehmer
- 29: Drehgelenk

## Patentansprüche

1. Staudruckmaschine, umfassend mindestens zwei mit einer Nabe (1) verbundene Radscheiben (2), die um eine horizontale Wellenachse (3) drehbar sind, und mehrere, an den Radscheiben (2) angeordnete längliche Schaufeln (4), die um jeweils parallel zur Wellenachse (3) angeordnete Drehachsen (5) drehbar angeordnet sind, **dadurch gekennzeichnet,**
- **dass** sich die Drehachsen (5) der Schaufeln (4) im Wesentlichen mittig zwischen einer Nabenaußenkante (6) und einer Radscheibenaußenkante (7) befinden,
- **dass** in mindestens einer Stellung der Radscheiben (2) eine Schaufel (4) dichtend an der Nabenaußenkante (6) anliegt,
- **und dass** eine Drehvorrichtung vorgesehen ist, welche dazu ausgeführt ist, die Schaufeln (4) relativ zu den Radscheiben (2) zu verdrehen oder zu verstellen.

2. Staudruckmaschine nach Anspruch 1, **dadurch gekennzeichnet, dass** die Drehvorrichtung dazu ausgeführt ist, die Schaufeln (4) im Wesentlichen mit der halben Winkelgeschwindigkeit der Radscheiben (2) zu drehen, oder im Wesentlichen mit der gleichen Winkelgeschwindigkeit der Radscheiben (2) zu drehen, oder im Wesentlichen keine volle Drehung der Schaufeln (4) zu vollziehen.

3. Staudruckmaschine nach Anspruch 1 oder 2, **dadurch gekennzeichnet,**
**dass** die Drehvorrichtung derart ausgeführt ist, dass der Drehsinn der Schaufeln (4) relativ zu den Radscheiben (2) entgegengesetzt zum Drehsinn der Radscheiben (2) selbst ist,
und/oder dass die Drehvorrichtung einen Motor, beispielsweise einen Elektromotor, hydraulischen Motor oder pneumatischen Motor, umfasst.

4. Staudruckmaschine nach einem der Ansprüche 1 bis 3, **dadurch gekennzeichnet, dass** die Drehvorrichtung ein konstantes oder variables, periodisches Getriebe, beispielsweise ein Kurvengetriebe, Koppelgetriebe, Umlaufrädergetriebe wie insbesondere Planetengetriebe (10), eine Winkelgetriebeanordnung (20) oder ein Riemengetriebe (15) umfasst, welches die Drehbewegung der Radscheiben (2) mit einem mittleren Übersetzungsverhältnis von 1:2 oder mit einem mittleren Übersetzungsverhältnis von 1:1 oder mit einem mittleren Übersetzungsverhältnis von 1:0 auf die Schaufeln (4) überträgt, sodass sich die Schaufeln (4) im Wesentlichen mit der halben Winkelgeschwindigkeit der Radscheiben (2) oder im Wesentlichen mit der gleichen Winkelgeschwindigkeit der Radscheiben (2) drehen oder im Wesentlichen keine volle Drehung vollziehen.

5. Staudruckmaschine nach einem der Ansprüche 1 bis 4, **dadurch gekennzeichnet, dass** in jener Stellung der Radscheiben (2), in der eine Schaufel (4) dichtend an der Nabenaußenkante (6) anliegt, sich diese Schaufel (4) zumindest bis zur Radscheibenaußenkante (7) erstreckt.

6. Staudruckmaschine nach einem der Ansprüche 1 bis 5, **dadurch gekennzeichnet, dass** die Staudruckmaschine einen Einlaufbereich (8) und einen Ablaufbereich (9) umfasst, wobei in mindestens einer Stellung der Radscheiben (2) eine Schaufel (4) dichtend an der Nabenaußenkante (6) anliegt und sich vorzugsweise bis zur Oberseite des Einlaufbereichs (8) oder bis zur Oberseite des Ablaufbereichs (9) erstreckt.

7. Staudruckmaschine nach einem der Ansprüche 1 bis 4 und 6, **dadurch gekennzeichnet,**
**dass** sich die Schaufeln (4) nicht bis zur Radscheibenaußenkante (7) erstrecken, oder dass sich die Schaufeln (4) über die Radscheibenaußenkante (7) hinaus erstrecken,
oder dass sich die Schaufeln (4) genau bis zur Radscheibenaußenkante (7) erstrecken.

8. Staudruckmaschine nach einem der vorhergehenden Ansprüche, **dadurch gekennzeichnet,**
**dass** die Schaufeln (4) als Schaufelblätter ausgeführt sind, deren Drehpunkt mittig oder exzentrisch angeordnet ist.

9. Staudruckmaschine nach einem der Ansprüche 1 bis 8, **dadurch gekennzeichnet,**
**dass** die Nabenaußenkante (6) im Wesentlichen kreisförmig ist,
oder dass die Nabenaußenkante (6) die Form eines Vielecks aufweist und Dichtflächen (13) sowie Auslaufflächen (16) umfasst, wobei die Dichtflächen (13) zum dichtenden Eingriff mit den Schaufeln (4) ausgebildet sind, und die Auslaufflächen (16) stets beabstandet zu den Schaufeln (4) angeordnet sind, sodass zwischen den Auslaufflächen (16) und den Schaufeln (4) stets ein Abströmbereich gebildet ist,
wobei gegebenenfalls die Dichtflächen (13) einen in Bezug zur Wellenachse (3) nach innen gewölbten, vorzugsweise kreisbogenförmigen, Querschnitt aufweisen.

10. Staudruckmaschine nach Anspruch 9, **dadurch gekennzeichnet, dass** am Übergang der Dichtflächen (13) zu den Auslaufflächen (16) eine Dichtkante (14) gebildet ist, wobei der Winkel zwischen den Dichtflächen (13) und den Auslaufflächen (16) vorzugsweise über 90°, beispielsweise 120°, ist, wobei gegebenenfalls die Auslauffläche (16) aus mehreren, vorzugsweise zwei, winkelig zueinander angeordneten Teilflächen gebildet ist.

11. Staudruckmaschine nach Anspruch 10, **dadurch gekennzeichnet, dass** die Dichtkanten (14) bezüglich der Wellenachse (3) kreisförmig angeordnet sind.

12. Staudruckmaschine nach einem der vorhergehenden Ansprüche, **dadurch gekennzeichnet, dass** an den Radscheiben (2) mindestens drei, vorzugsweise sechs oder sieben Schaufeln (4) in gleichmäßigen Abständen angeordnet sind.

13. Staudruckmaschine nach einem der Ansprüche 6 bis 12, **dadurch gekennzeichnet,**
- **dass** eine Schaufel (4) bei Drehung der Radscheiben (2) einen höchsten und einen tiefsten Drehpunkt aufweist,
- **dass** die Schaufel (4) am höchsten Drehpunkt in einem Winkel von unter 20° oder unter 10° zur Horizontalen, vorzugsweise im Wesentlichen parallel zum Ablaufbereich (9), ausgerichtet ist,
- **dass** die Schaufel (4) am tiefsten Drehpunkt in einem Winkel von unter 20° oder unter 10° zur Vertikalen, vorzugsweise im Wesentlichen normal zum Ablaufbereich (9), ausgerichtet ist.

14. Staudruckmaschine nach einem der vorhergehenden Ansprüche, **dadurch gekennzeichnet, dass** die Staudruckmaschine ein mittelschlächtiges Wasserrad umfasst oder dass die Staudruckmaschine als ein mittelschlächtiges Wasserrad ausgebildet ist.

15. Verwendung einer Staudruckmaschine nach einem der vorhergehenden Ansprüche zur Umwandlung von hydraulischer Energie eines strömenden Mediums in Rotationsenergie, **dadurch gekennzeichnet, dass** die Staudruckmaschine bei einer Fallhöhe des strömenden Mediums zwischen 0,1 m und 5 m, insbesondere zwischen 0,5 m und 4 m, besonders bevorzugt zwischen 0,5 m und 3 m, eingesetzt wird, wobei gegebenenfalls die Staudruckmaschine derart dimensioniert wird, dass der Stand des strömenden Mediums im Einlaufbereich (8) den durch die Dichtkanten (14) bezüglich der Wellenachse (3) gebildeten Kreis tangiert.

## Claims

1. A dynamic pressure machine, comprising at least two wheel discs (2), which are connected to a hub (1) and can be rotated about a horizontal shaft axis (3), and a plurality of elongated paddles (4), which are arranged on the wheel discs (2) and can be rotated about axes of rotation (5), which are each arranged parallel to the shaft axis (3), **characterized**
- **in that** the axes of rotation (5) of the paddles (4) are located substantially centrally between a hub outer edge (6) and a wheel disc outer edge (7),
- **in that,** in at least one position of the wheel discs (2), a paddle (4) sealingly abuts the hub outer edge (6),
- **and in that** a rotating device is provided, which is configured to rotate or adjust the paddles (4) relative to the wheel discs (2).

2. The dynamic pressure machine according to claim 1, **characterized in that** the rotating device is configured to rotate the paddles (4) at substantially half the angular velocity of the wheel discs (2), or to rotate them at substantially the same angular velocity of the wheel discs (2), or to perform substantially no full rotation of the paddles (4).

3. The dynamic pressure machine according to claim 1 or 2, **characterized**
**in that** the rotating device is configured in such a way that the direction of rotation of the paddles (4) relative to the wheel discs (2) is opposite to the direction of rotation of the wheel discs (2) themselves,
and/or in that the rotating device comprises a motor, for example an electric motor, hydraulic motor or pneumatic motor.

4. The dynamic pressure machine according to one of claims 1 to 3, **characterized in that** the rotating device comprises a constant or variable periodic gear, for example a cam gear, a coupling gear, an epicyclic gear train such as in particular a planetary gear (10), an angular gear arrangement (20) or a belt gear (15), which transmits the rotary motion of the wheel discs (2) with an average transmission ratio of 1:2 or with an average transmission ratio of 1:1 or with an average transmission ratio of 1:0 to the paddles (4) so that the paddles (4) rotate at substantially half the angular velocity of the wheel discs (2) or at substantially the same angular velocity of the wheel discs (2), or substantially do not perform a full rotation.

5. The dynamic pressure machine according to one of claims 1 to 4, **characterized in that in that** position of the wheel discs (2) in which a paddle (4) sealingly abuts the hub outer edge (6), said paddle (4) extends at least to the wheel disc outer edge (7).

6. The dynamic pressure machine according to one of claims 1 to 5, **characterized in that** the dynamic pressure machine comprises an inflow region (8) and an outflow region (9), wherein in at least one position of the wheel discs (2) a paddle (4) sealingly abuts the hub outer edge (6) and preferably extends to the upper side of the inflow region (8) or to the upper side of the outflow region (9).

7. The dynamic pressure machine according to one of claims 1 to 4 and 6, **characterized**
**in that** the paddles (4) do not extend as far as the wheel disc outer edge (7), or
**in that** the paddles (4) extend beyond the wheel disc outer edge (7), or
**in that** the paddles (4) extend exactly as far as the wheel disc outer edge (7).

8. The dynamic pressure machine according to one of the preceding claims, **characterized in that** the paddles (4) are configured as vanes, the center of rotation of which is arranged centrally or eccentrically.

9. The dynamic pressure machine according to any one of claims 1 to 8, **characterized**
**in that** the hub outer edge (6) is substantially circular,
or in that the hub outer edge (6) has the shape of a polygon and comprises sealing surfaces (13) and outflow surfaces (16), the sealing surfaces (13) being designed for sealingly engaging the paddles (4), and the outflow surfaces (16) always being arranged at a distance from the paddles (4) so that an outflow area is always formed between the outflow surfaces (16) and the paddles (4),
wherein, optionally, the sealing surfaces (13) have an inwardly curved, preferably arcuate, cross-section with respect to the shaft axis (3).

10. The dynamic pressure machine according to claim 9, **characterized in that** a sealing edge (14) is formed at the transition of the sealing surfaces (13) to the outflow surfaces (16), the angle between the sealing surfaces (13) and the outflow surfaces (16) preferably being more than 90°, for example 120°, the outflow surface (16) optionally being made up of a plurality of, preferably two, partial surfaces, which are arranged at an angle to one another.

11. The dynamic pressure machine according to claim 10, **characterized in that** the sealing edges (14) are arranged circularly with respect to the shaft axis (3).

12. The dynamic pressure machine according to one of the preceding claims, **characterized in that** at least three, preferably six or seven, paddles (4) are arranged at regular intervals on the wheel discs (2).

13. The dynamic pressure machine according to any one of claims 6 to 1 2, **characterized**
- **in that** a paddle (4) has a highest and a lowest point of rotation when the wheel discs (2) rotate,
- **in that**, at the highest point of rotation, the paddle (4) is oriented at an angle of less than 20° or less than 10° to the horizontal, preferably substantially parallel to the outflow region (9),
- **in that**, at the lowest point of rotation, the paddle (4) is oriented at an angle of less than 20° or less than 10° to the vertical, preferably substantially normal to the outflow region (9).

14. The dynamic pressure machine according to any one of the preceding claims, **characterized in that** the dynamic pressure machine comprises a breastshot water wheel or **in that** the dynamic pressure machine is designed as a breastshot water wheel.

15. A use of a dynamic pressure machine according to one of the preceding claims for converting hydraulic energy of a flowing medium into rotational energy, **characterized in that** the dynamic pressure machine is operated at a drop height of the flowing medium between 0.1 m and 5 m, in particular between 0.5 m and 4 m, particularly preferably between 0.5 m and 3 m, wherein the dynamic pressure machine is optionally dimensioned in such a way that the level of the flowing medium in the inflow region (8) is tangent to the circle formed by the sealing edges (14) with respect to the shaft axis (3).

## Revendications

1. Une machine à pression dynamique comprenant au moins deux disques de roue (2) reliés à un moyeu (1) et pouvant tourner autour d'un axe d'arbre (3) horizontal, et une pluralité de pales (4) allongées disposées sur les disques de roue (2) et pouvant tourner autour des axes de rotation (5) respectifs disposés parallèlement à l'axe d'arbre (3), **caractérisée**
- **en ce que** les axes de rotation (5) des pales (4) se trouvent sensiblement au milieu entre un bord extérieur (6) du moyeu et un bord extérieur (7) de la disque de roue,
- **en ce qu'**une pale (4) s'applique de manière étanche contre le bord extérieur (6) du moyeu dans au moins une position des disques de roue (2),
- **et en ce qu**'un dispositif de rotation est prévu qui est conçu pour tourner ou ajuster les pales (4) par rapport aux disques de roue (2).

2. La machine à pression dynamique selon la revendication 1, **caractérisée en ce que** le dispositif de rotation est conçu pour tourner les pales (4) sensiblement à la moitié de la vitesse angulaire des disques de roue (2) ou sensiblement à la même vitesse angulaire que les disques de roue (2) ou pour n'effectuer sensiblement pas de rotation complète des pales (4).

3. La machine à pression dynamique selon la revendication 1 ou 2, **caractérisée en ce que** le dispositif de rotation est conçue de sorte que le sens de rotation des pales (4) par rapport aux disques de roue (2) est opposé au sens de rotation des disques de roue (2) eux-mêmes,
et/ou **en ce que** le dispositif de rotation comprend un moteur, par exemple un moteur électrique, un moteur hydraulique ou un moteur pneumatique.

4. La machine à pression dynamique selon l'une des revendications 1 à 3, **caractérisée en ce que** le dispositif de rotation comprend un engrenage périodique constant ou variable, par exemple une commande à cames, un mécanisme à bielle, un engrenage épicycloïdal tel que notamment un engrenage planétaire (10), un arrangement d'engrenage angulaire (20) ou un engrenage à courroie (15), qui transmet le mouvement de rotation des disques de roue (2) aux pales (4) avec un rapport de transmission moyen de 1:2 ou avec un rapport de transmission moyen de 1:1 ou avec un rapport de transmission moyen de 1:0 de sorte que les pales (4) tournent sensiblement à la moitié de la vitesse angulaire des disques de roue (2) ou sensiblement à la même vitesse angulaire que les disques de roue (2) ou n'effectuent sensiblement pas de rotation complète.

5. La machine à pression dynamique selon l'une des revendications 1 à 4, **caractérisée en ce que** dans la position des disques de roue (2) dans laquelle une pale (4) s'applique de manière étanche contre le bord extérieur (6) du moyeu, cette pale (4) s'étend au moins jusqu'au bord extérieur (7) de la disque de roue.

6. La machine à pression dynamique selon l'une des revendications 1 à 5, **caractérisée en ce que** la machine à pression dynamique comprend une zone d'entrée (8) et une zone d'écoulement (9), dans laquelle dans au moins une position des disques de roue (2) une pale s'applique de manière étanche contre le bord extérieur (6) du moyeu et s'étend de préférence jusqu'en haut de la zone d'entrée (8) ou jusqu'en haut de la zone d'écoulement (9).

7. La machine à pression dynamique selon l'une des revendications 1 à 4 et 6, **caractérisée**
**en ce que** les pales (4) ne s'étendent pas jusqu'au bord extérieur (7) de la disque de roue, ou
**en ce que** les pales (4) s'étendent au-delà du bord extérieur (7) de la disque de roue, ou
**en ce que** les pales (4) s'étendent exactement jusqu'au bord extérieur (7) de la disque de roue.

8. La machine à pression dynamique selon l'une des revendications précédentes, **caractérisée**
**en ce que** les pales (4) sont réalisées comme des ailettes dont le centre de rotation est disposé au centre ou excentré.

9. La machine à pression dynamique selon l'une des revendications 1 à 8, **caractérisée en**
**ce que** le bord extérieur (6) du moyeu est sensiblement circulaire,
ou **en ce que** le bord extérieur (6) du moyeu a la forme d'un polygone et comprend des surfaces d'étanchéité (13) ainsi que des surfaces de sortie (16), les surfaces d'étanchéité (13) étant adaptées pour un contact étanche avec les pales (4), et les surfaces de sortie (16) étant toujours disposées espacées des pales (4), de sorte qu'une zone aval est toujours formée entre les surfaces de sortie (16) et les pales (4),
dans laquelle, le cas échéant, les surfaces d'étanchéité (13) ont une section transversale cintrée vers l'intérieur, de préférence courbée en arc de cercle, par rapport à l'axe d'arbre (3).

10. La machine à pression dynamique selon la revendication 9, **caractérisée en ce qu'**à la transition entre les surfaces d'étanchéité (13) et les surfaces de sortie (16) un arête d'étanchéité (14) est formé, dans laquelle l'angle entre les surfaces d'étanchéité (13) et les surfaces de sortie (16) est de préférence supérieur à 90°, par exemple 120°, dans laquelle, le cas échéant, la surface de sortie (16) est formée par plusieurs, de préférence deux, surfaces partielles disposées angulairement.

11. La machine à pression dynamique selon la revendication 10, **caractérisés en ce que** les arêtes d'étanchéité (14) sont disposés en cercle par rapport à l'axe d'arbre (3).

12. La machine à pression dynamique selon l'une des revendications précédentes, **caractérisée en ce que** au moins trois, de préférence six ou sept, pales (4) sont disposées à intervalles réguliers sur les disques de roue (2).

13. La machine à pression dynamique selon l'une des revendications 6 à 12, **caractérisée**
- **en ce qu'**une pale (4) a un point de rotation le plus haut et un point de rotation le plus bas lors de la rotation des disques de roue (2),
- **en ce que** la pale (4) est orientée selon un angle inférieur à 20° ou inférieur à 10° par rapport à l'horizontale, de préférence sensiblement parallèle à la zone d'écoulement (9) au point de rotation le plus élevé,
- **en ce que** la pale (4) est orientée selon un angle inférieur à 20° ou inférieur à 10° par rapport à la verticale, de préférence sensiblement perpendiculairement à la zone d'écoulement (9) au point de rotation le plus bas.

14. La machine à pression dynamique selon l'une des revendications précédentes, **caractérisée en ce que** la machine à pression dynamique comprend une roue de poitrine ou **en ce que** la machine à pression dynamique est réalisée comme une roue de poitrine.

15. Une utilisation d'une machine à pression dynamique selon l'une des revendications précédentes pour convertir l'énergie hydraulique d'un fluide en écoulement en énergie de rotation, **caractérisée en ce que** la machine à pression dynamique est utilisée à une hauteur de chute du fluide en écoulement comprise entre 0,1 m et 5 m, en particulier entre 0,5 m et 4 m, de manière particulièrement préférée entre 0,5 m et 3 m, la machine à pression dynamique étant dimensionnée, le cas échéant, de sorte que le niveau du fluide en écoulement dans la zone d'entrée (8) touche le cercle formé par les arêtes d'étanchéité (14) par rapport à l'axe d'arbre (3).
